# EUROPÄISCHE PATENTSCHRIFT

(11) **EP 0 387 492 B1**
(45) Veröffentlichungstag und Bekanntmachung des Hinweises auf die Patenterteilung: **01.12.1993**
(21) Anmeldenummer: 90100820.1
(22) Anmeldetag: 16.01.1990
(51) Int. Cl.: C01F 7/04

(54) **Verfahren zur Herstellung von Natriumaluminat**
Process for the production of sodium aluminate
Procédé de fabrication d'aluminate de sodium

(30) Priorität: 16.03.1989 DE 3908661
(43) Veröffentlichungstag der Anmeldung: 19.09.1990
(73) Patentinhaber: DEUTSCHE SOLVAY-WERKE GMBH, 42697 Solingen (DE)
(72) Erfinder: Dillenburg, Helmut, Dr., D-4134 Rheinberg 1 (DE); Heinen, Wolfgang, D-4134 Rheinberg 4 (DE); Heinrich, Dietmar, Dr., D-4178 Kevelaer 3 (DE)
(74) Vertreter: Lauer, Dieter, Dr.

(56) Entgegenhaltungen:
- EP-A- 0 182 493
- EP-A- 0 298 914
- US-A- 4 261 958
- CHEMICAL ABSTRACTS, Band 81, Nr. 22, 2. Dezember 1974, Seite 118, Zusammenfassung Nr. 138196x, Columbus, Ohio, US; & IT-A-878 104 (MONTECATINI EDISON S.p.A.) 02-11-1970
- CHEMICAL ABSTRACTS, Band 88, Nr. 49, 1986, Seite 123, Zusammenfassung Nr. 91756g, Columbus, Ohio, US; & JP-A-77 33 900 (ALL-UNION SCIENTIFIC-RESEARCH AND DESIGN INSTITUTE OF THE ALUMINUM, MAGNESIUM, AND ELECTRODE INDUSTRY) 15-03-1977
- CHEMICAL APSTRACTS, Band 104, Nr. 24, Juni 1986, Seite 127, Zusammenfassung Nr. 209494z, Columbus, Ohio, US; & JP-A-60 221 317 (SUMITOMO ALUMINIUM SMELTING CO. LTD) 06-11-1985

## Beschreibung

Die vorliegende Erfindung betrifft ein Verfahren zur Herstellung von Natriumaluminat der allgemeinen Formel NaAlO₂, NaAlO₂ x 1,5 H₂O und/oder NaAlO₂ x X H₂O durch Umsetzung von Aluminiumoxidhydrat und/oder Aluminiumhydroxid mit einem Überschuß an Natriumhydroxid und unter Einhaltung eines Gewichtsverhältnisses Al : Na von 1 : 1,03 bis 1 : 1,50, vorzugsweise 1 : 1,05 bis 1 : 1,30, unter Verwendung einer wäßrigen Natriumhydroxidlösung mit einem NaOH-Gehalt von 25 bis 55 Gew.-%, vorzugsweise 35 bis 51 Gew.-%, wobei nach der Umsetzung eine Entwässerung des Gemisches durch eine Zerstäubertrocknung unter Mitverwendung von erhitzten Gasen oder Dämpfen als Wärmeträger erfolgt. Die Erfindung betrifft weiterhin eine Vorrichtung zur insbesondere kontinuierlichen Durchführung des Verfahrens.

Aus der DE-AS 25 37 969 ist ein Verfahren zur Herstellung von Natriumaluminat aus einer Aluminatlösung durch Trocknung bei höherer Temperatur bekannt. Die Aluminatlösung mit einer Konzentration an kaustischem Na₂O von 45 bis 350 g/l und einem Molekularverhältnis von kaustischem Na₂O zu Al₂O₃ von 1,1 bis 1,8 wird auf eine zwischen 250 und 350 g/l liegende Konzentration an kaustischem Na₂O durch Vakuumtrocknung oder Verdampfen in mehrstufigen Verdampfungsanlagen entwässert und dann einer Wirbelschichttrocknung bei einer Temperatur von 250 bis 400 °C unterworfen. Bei den hier verwendeten Natriumaluminatlösungen handelt es sich um solche, die durch Auslaugung von Bauxiten bei der Tonerdegewinnung erhalten werden. Weiterhin läßt sich bei dem erforderlichen Eindampfen dieser Lösungen vor der Wirbelschichttrocknung nicht vermeiden, daß Krustenbildung an den Gefäßwänden auftritt, die zu einer Verstopfung der Ventile und Leitungen führen.

In der DE-PS 28 19 004 wird ein Verfahren zur Gewinnung von rieselfähigen Alkalialuminaten aus deren wäßrigen Lösungen, die eine Konzentration an Alkalioxid von 1 bis 6 Mol/l und ein Molverhältnis von Alkalioxid zu AL₂O₃ > 1 besitzen, durch Entwässern mittels eines Trocknungsprozesses beschrieben. Die Aluminatlösungen, die zusätzlich 0,1 bis 5,0 Gew.-% nieder- oder hochmolekulare organische Polyhydroxiverbindungen als Stabilisatoren enthalten, werden einer Zerstäubungstrocknung unter Verwendung von heißen Gasen oder Dämpfen als Wärmeträger unterworfen. Wie den Beispielen entnommen werden kann, sind die Aluminatlösungen trübe und müssen vor der Zerstäubungstrocknung filtriert werden, da es offenbar zu Auskristallisationen während der Lagerung kommt. Das Gesamtverfahren wird absatzweise, nicht kontinuierlich durchgeführt.

Der vorliegenden Erfindung liegt die Aufgabe zugrunde, ein Verfahren zur Herstellung von Natriumaluminat und eine Vorrichtung zur Durchführung dieses Verfahrens zur Verfügung zu stellen, welche die Nachteile des Standes der Technik nicht aufweist, die zu klaren stabilisatorfreien Aluminatlösungen führen, die durch Zerstäubungs- und Fließbetttrocknung ohne Verkrustung der Zerstäuberdüsen ein feinteiliges, rieselfähiges und äußerst reaktives Produkt ergeben, wobei durch die besondere Ausbildung der Zerstäuberscheibe und deren besondere Anordnung im Zerstäubungstrockenbehälter keine Anbackungen an der Trocknerwandung entstehen sollen. Das Gesamtverfahren sollte vorzugsweise kontinuierlich durchgeführt werden können und außerdem einfach und energetisch günstig sein.

Die Aufgabe wird erfindungsgemäß dadurch gelöst, daß in einem Mischgefäß, vorzugsweise in einem beheizbaren Vormischbehälter unter Rühren eine Suspension von Aluminiumoxidhydrat und/oder Aluminiumhydroxid in einem Überschuß an Natriumhydroxid bei Temperaturen von 20 bis 120 °C, vorzugsweise 30 bis 80 °C, hergestellt wird, diese Suspension anschließend zur Umsetzung der Reaktionsteilnehmer durch mindestens ein mit dem Mischgefäß, vorzugsweise beheizbaren Vormischbehälter mittelbar oder unmittelbar verbundenes, beheiztes Reaktionsrohr unter Druck geleitet und die erhaltene Natriumaluminatlösung einer Zerstäubungstrocknung unterworfen wird, wobei die Gasaustritts- oder Dampfaustrittstemperatur des bei der Zerstäubungstrocknung verwendeten Gases auf eine Temperatur von 130 bis 190 °C, vorzugsweise von 140 bis 170 °C, eingestellt wird.

Vorteilhaft wird das Reaktionsrohr auf eine Temperatur von 100 bis 160 °C, vorzugsweise 115 bis 140 °C, eingestellt und die Natriumaluminatlösung vor der Zerstäubungstrocknung auf eine Temperatur unterhalb ihrer Siedetemperatur abgekühlt, vorzugsweise um 2 bis 15 °C unterhalb der Siedetemperatur abgekühlt.

Das Reaktionsrohr kann doppelwandig zum Durchfluß des flüssigen Heizmediums oder einwandig, mit einem äußeren elektrischen Heizmantel versehen, ausgebildet sein. Es kann aus einem geraden Rohr oder einem wendelförmig gebogenen Rohr bestehen, wobei die Länge und die lichte Weite des Reaktionsrohres so gewählt werden, daß nicht nur eine wirtschaftliche Herstellung der Natriumaluminatlösung erfolgt, sondern ein weitgehender Umsatz der Reaktionsteilnehmer sichergestellt ist. Vorzugsweise beträgt der Durchsatz der Reaktionsmischung und/oder der gebildeten Natriumaluminatlösung durch das Reaktionsrohr mehr als 0,01 5 kg/min, vorzugsweise mehr als 0,5 kg/min.

Vorteilhaft ist die Verweilzeit der Reaktionsmischung im Reaktionsrohr größer als 10 s, vorzugsweise größer als 20 s.

Der im Reaktionsrohr aufrechtzuerhaltene Druck beträgt zweckmäßig 1.5 bis 10 bar vorzugsweise 2 bis 5 bar. Dieser Druck wird durch einen Inertgasüberdruck oder Luftüberdruck im geschlossenen Mischgefäß, Vorzugsweise Stickstoffgasüberdruck und/oder durch eine Druckerhöhung, vorzugsweise durch mindestens eine zwischen Mischgefäß und Reaktionsrohr angeordnete Druckpumpe eingestellt.

Nach einer bevorzugten Ausführungsform des erfindungsgemäßen Verfahrens ist die Zerstäubungstrocknung, vorzugsweise Scheibenzerstäubungstrocknung, mit einer Nachtrocknung, vorzugsweise Fließbetttrocknung, kombiniert oder die Fließbetttrocknung der Zerstäubungstrocknung, vorzugsweise Scheibenzerstäubungstrocknung, nachgeschaltet, wobei die Fließbetttrocknung bei einer Temperatur (in Abhängigkeit von dem gewünschten Trocknungsgrad) von über 170 °C, vorzugsweise über 190 °C, durchgeführt wird.

Nach einer zweckmäßigen Ausführungsform erfolgt die Umsetzung der Reaktionsteilnehmer und/oder die Zerstäubungstrocknung ohne Mitverwendung von Zusatz- und/oder Stabilisierungsmitteln.

Es hat sich als vorteilhaft erwiesen, wenn durch die bei der Scheibenzerstäubungstrocknung verwendete Zerstäuberscheibe die gebildete Natriumaluminatlösung in einem Winkel von kleiner als 65 °(bezogen auf die Rotationsachse und gemessen von der Rotationsachse aus zerstäubt und unter Miterverwendung eines Heißluftstromes, der ringförmig oder schraubenförmig um die Zerstäuberscheibe zum Behälterboden geführt wird, verwirbelt und getrocknet wird.

Gemäß einer zweckmäßigen Ausgestaltung des erfindungsgemäßen Verfahrens wird dafür Sorge getragen, daß durch Einhaltung einer erhöhten Einblasgeschwindigkeit der Heißluft oder des heißen Inertgases, durch die rand-, wulst- oder ringförmige Profilierung der Zerstäuberscheibe, durch die Abstandsvergrößerung der Seitenwand von der Zerstäuberscheibe und durch die Abstandsvergrößerung der Zerstäuberscheibe vom Behälterboden weniger als 30 Gew.-%, vorzugsweise weniger als 20 Gew.-%, des aus der Zerstäuberscheibe austretenden Natriumaluminates (berechnet als Feststoff) auf die Seitenwand des Behälters oder Trocknungsbehälters auftreffen.

Es hat sich als besonders vorteilhaft erwiesen, wenn bei der Durchführung des erfindungsgemäßen Verfahrens durch die bei der Scheibenzerstäubertrocknung verwendete Zerstäuberscheibe die Natriumaluminatlösung in einem Winkel von 25 bis 140 °, vorzugsweise 35 bis 80 ° (bezogen auf die zur Rotationsachse im Winkel von 90 ° angeordnete Rotationsebene) weggeschleudert wird, wobei eine Zerstäuberscheibe verwendet wird, die eine wulst- oder ringähnliche Randprofilierung aufweist und Austrittsöffnungen oder Zerstäuberöffnungen an einer gewölbten oder profilierten Innenfläche im Rand oder in der Innenfläche der wulst- oder ringförmigen Randprofilierung besitzt, und wenn durch Mitverwendung eines Trockengasstromes oder Heißluftstromes die geschleuderten und versprühten Natriumaluminatlösungen von der Seitenwandung des Trockenbehälters abgelenkt oder weitgehend abgelenkt und gleichzeitig verwirbelt werden, wobei der Abstand der Seitenwand des Trocknungsbehälters von der Zerstäuberscheibe größer als der halbe Radius der Zerstäuberscheibe, vorzugsweise größer als der Radius der Zerstäuberscheibe, ist.

Vorzugsweise wird die Scheibenzerstäubertrocknung bei einer Umdrehungszahl der Zerstäuberscheibe von 15000 bis 25000 UmP, vorzugsweise 17000 bis 20000 UmP, durchgeführt.

Die erfindungsgemäße Vorrichtung zur Herstellung von Natriumaluminat unter Mitverwendung eines Zerstäubertrockners, durch den Natriumaluminat zerstäubt und getrocknet wird, vorzugsweise zur Durchführung des erfindungemäßen Verfahrens, besteht aus einem beheizbaren, mit Rührer sowie Zuleitungen für die Reaktionsteilnehmer versehenen Vormischbehälter, mindestens einem mit dem Vormischbehälter mittelbar oder unmittelbar verbundenen, vorzugsweise wendelförmig und als Doppelmantelrohr ausgebildeten Reaktionsrohr (2) und mindestens einem Zerstäubungs- und einem nachgeschalteten Wirbelschichttrockner oder Fließbetttrockner

Zweckmäßig ist der Mischbehälter als Druckbehälter ausgebildet und mit Zuleitungen für die Inertgaszufuhr versehen und mit dem Reaktionsrohranfang unmittelbar verbunden.

Gemäß einer besonderen Ausführungsform der Vorrichtung ist im Reaktionsrohr, vorzugsweise zwischen dem Boden des Mischbehälters und dem Reaktionsrohranfang eine Druckpumpe (3) angeordnet.

Vorteilhaft ist der Zerstäubungstrockner unmittelbar oder über eine Rohrleitung mit dem Reaktionsrohrende verbunden und/oder eine Kühlvorrichtung vor der Zerstäubertrockungsvorrichtung und/oder dessen Reaktionsrohrende angeordnet.

Vorteilhaft weist die im Zerstäubungstrockner verwendete Zerstäuberscheibe einen im Winkel von 35 bis 80 ° (bezogen auf die zur Rotationsachse im Winkel von 90 ° angeordnete Rotationsebene), angeorndeten Rand und/oder eine wulst-oder ringähnliche Randprofilierung auf und die Austrittsöffnungen oder Zerstäuberöffnungen der Zerstäuberscheibe sind an der gewölbten oder profilierten Innenfläche im Rand oder Innenfläche der wulst- und/oder ringförmigen Randprofilierung angeordnet.

Gemäß einer vorteilhaften Ausführungsform ist zwischen dem Reaktionsrohranfang und dem Mischgefäßboden oder dem Mischgefäßauslaß oder der Druckpumpe ein Rohrleitungsanschluß zur Einleitung von Inertgas und/oder Luft angeordnet.

Zweckmäßig ist im Zerstäubungstrockner oder Zerstäubungstrocknerbehälter mindestens ein Anschluß für Heißluft oder heißes Inertgas, vorzugsweise im oberen Behälterbereich, angeordnet.

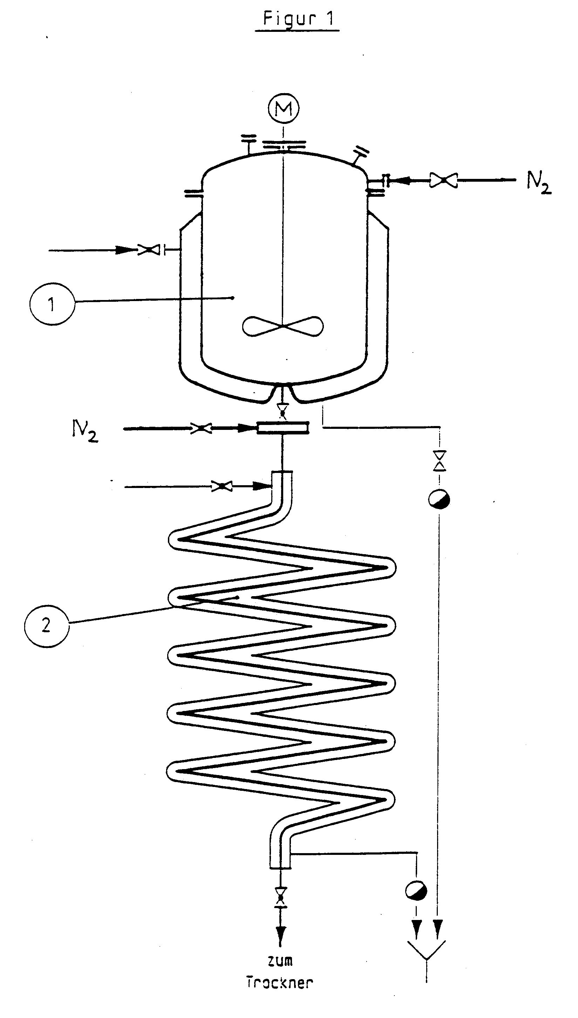

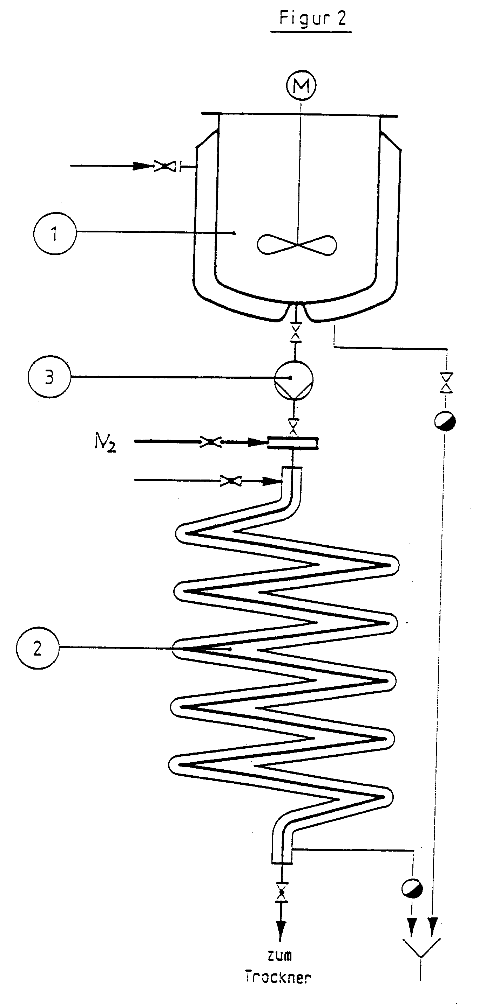

In den beigefügten Figuren 1 und 2 sind bevorzugte Ausführungsformen der erfindungsgemäßen Vorrichtung dargestellt. Hierin bedeuten:
1 Mischgefäß
2 Reaktionsrohr
3 Druckpumpe
In der Fig. 1 ist das Mischgefäß 1 druckfest ausgebildet und in seinem oberen Teil mit einer Intertgaszufuhr zwecks Einstellung des erfordlichen Drucks im Reaktionsrohr 2 versehen. Zwischen dem Reaktionsrohranfang und dem Mischgefäßauslaß ist ein Rohrleitungsanschluß zur Einleitung von zusätzlichem Inertgas vorgesehen.

In der Fig. 2 liegt das Mischgefäß in einer nicht druckfesten Ausführungsform vor und ist unter Zwischenschaltung einer Druckpumpe 3 mit dem Reaktionsrohr 2 verbunden. Zwischen dem Reaktionsrohranfang und der Druckpumpe 3 ist ein Rohrleitungsanschluß zur Einleitung von Inertgas vorgesehen.

### Ausführungsbeispiel:

In ein 50 Liter Mischgefäß (1) wurden 39,0 kg 50 %ige Natronlauge und anschließend 33,7 kg feuchtes Aluminiumhydroxid (61,6 %ig an Al₂O₃) unter kräftigem Rühren eingefüllt und bei einer Temperatur von 30 °C miteinander unter Bildung einer Suspension vermischt.

Mit einem Druck von 2 bar wurde diese Natronlauge-Aluminiumhydroxid-Suspension durch ein beheiztes Reaktionsrohr (2) von 18 m Länge und 6 mm lichtem Durchmesser und einer Temperatur von 125 °C gedrückt. Der Durchfluß wurde auf 1,1 kg pro Minute eingestellt. Die am Ende des Reaktionsrohres erhaltene Aluminatlösung war klar und hatte eine Temperatur von 120 °C. Diese Aluminatlösung wurde unmitellbar in einen Zerstäubungstrockner eingegeben, der die erfindungemäße Zerstäuberscheibe besaß und in einem Winkel von 60 ° (bezogen auf die Reaktionsebene und gemessen von der Rotationsachse aus) unter Mitverwendung eines Heißlufttrockners, der schraubenförmig um die Zerstäuberscheide zum Behälterboden geführt wurde, zerstäubt. Getrocknet wurde unter folgenden Bedingungen:
Lufteintrittstemperatur 290 °C
Luftaustrittstemperatur 155 °C.

Erhalten wurde ein Produkt. das 24,1 % Al bzw. 73,2 % Natriumaluminat und 19,3 % Wasser enthielt.

Die Nachtrocknung des Aluminates unmittelbar im Anschluß an die Zerstäubungstrocknung in einem Fließbetttrockner bei 240 °C ergab ein feinteiliges, rieselfähiges Produkt mit 28,8 % Al bzw. 87,5 % Natriumaluminat, 3.4 % Wasser und einer Schüttdichte von 0,6 kg/l.

## Patentansprüche

1. Verfahren zur Herstellung von Natriumaluminat der allgemeinen Formel NaAlO₂, NaAlO₂ x 1,5 H₂O und/oder NaAlO₂ x X H₂O durch Umsetzung von Aluminiumoxidhydrat und/oder Aluminiumhydroxid mit einem Überschuß an Natriumhydroxid und unter Einhaltung eines Gewichtsverhältnisses Al : Na von
1 : 1,03 bis 1 : 1,50, vorzugsweise
1 : 1,05 bis 1 : 1,30,
unter Verwendung einer wäßrigen Natriumhydroxidlösung mit einem NaOH-Gehalt von
25 bis 55 Gew.-%, vorzugsweise
35 bis 51 Gew.-%,
wobei nach der Umsetzung eine Entwässerung des Gemisches durch eine Zerstäubertrocknung unter Mitverwendung von erhitzten Gasen oder Dämpfen als Wärmeträger erfolgt, dadurch gekennzeichnet, daß in einem Mischgefäß, vorzugsweise in einem beheizbaren Vormischbehälter, unter Rühren eine Suspension von Aluminiumoxidhydrat und/oder Aluminiumhydroxid in einem Überschuß an Natriumhydroxid bei Temperaturen von 20 bis 120 °C, vorzugsweise 30 bis 80 °C, hergestellt wird, diese Suspension anschließend zur Umsetzung der Reaktionsteilnehmer durch mindestens ein mit dem Mischgefäß, vorzugsweise beheizbaren Vormischbehälter, mittelbar oder unmittelbar verbundenes, beheiztes Reaktionsrohr unter Druck geleitet und die erhaltene Natriumaluminatlösung einer Zerstäubungstrocknung unterworfen wird, wobei die Gasaustritts- oder Dampfaustrittstemperatur des bei der Zerstäubungstrocknung verwendeten Gases auf eine Temperatur von 130 bis 190 °C, vorzugsweise 40 bis 170 °C, eingestellt wird.

2. Verfahren nach Anspruch 1, dadurch gekennzeichnet, daß das Reaktionsrohr auf eine Temperatur von 100 bis 160 °C, vorzugsweise 115 bis 140 °C, eingestellt und die Natriumaluminatlösung vor der Zerstäubungstrockung auf eine Temperatur unterhalb ihrer Siedetemperatur abgekühlt wird, vorzugsweise um 2 bis 15 °C unterhalb der Siedetemperatur abgekühlt wird.

3. Verfahren nach Anspruch 1 und 2, dadurch gekennzeichnet, daß im Reaktionsrohr ein Druck von 1,5 bis 10 bar, vorzugsweise 2 bis 5 bar, aufrechterhalten wird.

4. Verfahren nach einem oder mehreren der Ansprüche 1 bis 3, dadurch gekennzeichnet, daß der Druck im Reaktionsrohr durch einen Inertgasüberdruck oder Luftüberdruck im geschlossenen Mischgefäß, vorzugsweise Stickstoffgasüberdruck und/oder durch eine Druckerhöhung, vorzugsweise durch mindestens eine zwischen Mischgefäß und Reaktionsrohr angeordnete Druckpumpe, eingestellt wird.

5. Verfahren nach einem oder mehreren der Ansprüche 1 bis 4, dadurch gekennzeichnet, daß der Durchsatz der Reaktionsmischung und/oder der gebildeten Natriumaluminatlösung durch das Reaktionsrohr mehr als 0,01 kg/min, vorzugsweise mehr als 0,5 kg/min, beträgt.

6. Verfahren nach einem oder mehreren der Ansprüche 1 bis 5, dadurch gekennzeichnet, daß die Zerstäubungstrocknung, vorzugsweise Scheibenzerstäubungstrocknung, mit einer Nachtrockung, vorzugsweise Fließbetttrocknung, kombiniert oder die Fließbetttrocknung der Zerstäubungstrocknung, vorzugsweise Scheibenzerstäubungstrocknung, nachgeschaltet ist, wobei die Fließbetttrocknung bei einer Temperatur (in Abhängigkeit von dem gewünschten Trocknungsgrad) von über 170 °C, vorzugsweise über 190 °C, durchgeführt wird.

7. Verfahren nach einem oder mehreren der Ansprüche 1 bis 6, dadurch gekennzeichnet, daß die Umsetzung und/oder die Zerstäubungstrocknung ohne Mitverwendung von Zusatz- und/oder Stabilisierungsmitteln durchgeführt wird.

8. Verfahren nach einem oder mehreren der Ansprüche 1 bis 7, dadurch gekennzeichnet, daß durch die bei der Scheibenzerstäubertrockung verwendete Zerstäuberscheibe die gebildete Natriumaluminatlösung in einem Winkel von kleiner als 65 ° (bezogen auf die Rotationsachse und gemessen von der Rotationsachse aus) zerstäubt und unter Mitverwendung eines Heißluftstromes, der ringförmig oder schraubenförmig um die Zerstäuberscheibe zum Behälterboden geführt wird, verwirbelt und getrocknet wird.

9. Verfahren nach einem oder mehreren der Ansprüche 1 bis 8, dadurch gekennzeichnet, daß durch Einhaltung einer erhöhten Einblasgeschwindigkeit der Heißluft oder des heißen Inertgases, durch die rand-, wulst-oder ringförmige Profilierung der Zerstäuberscheibe, durch die Abstandsvergrößerung der Seitenwand von der Zerstäuberscheibe und durch die Abstandsvergrößerung der Zerstäuberscheibe vom Behälterboden weniger als 30 Gew.-%, vorzugsweise weniger als 20 Gew.-%, des aus der Zerstäuberscheibe austretenden Natriumaluminates (berechnet als Feststoff) auf die Seitenwand des Behälters oder Trokknungsbehälters auftreffen.

10. Verfahren nach einem oder mehreren der Ansprüche 1 bis 9, dadurch gekennzeichnet, daß durch die bei der Scheibenzerstäubertrocknung verwendete Zerstäuberscheibe die Natriumaluminatlösung in einem Winkel von 25 bis 140 °, vorzugsweise 35 bis 80 ° (bezogen auf die zur Rotationsachse im Winkel von 90 ° angeordnete Rotationsebene) weggeschleudert wird, wobei eine Zerstäuberscheibe verwendet wird, die eine wulst- oder ringähnliche Randprofilierung aufweist und Austrittsöffnungen oder Zerstäuberöffnungen an einer gewölbten oder profilierten Innenfläche im Rand oder in der Innenfläche der wulst- oder ringförimigen Randprofilierung besitzt, daß durch Mitverwendung eines Trockengasstromes oder Heißluftstromes die geschleuderten und versprühten Natriumaluminatlösungen von der Seitenwandung des Trockenbehälters abgelenkt oder weitgehend abgelenkt und gleichzeitig verwirbelt werden, wobei der Abstand der Seitenwand des Trocknungsbehälters von der Zerstäuberscheibe größer als der halbe Radius der Zerstäuberscheibe, vorzugsweise größer als der Radius der Zerstäuberscheibe, ist.

11. Verfahren nach einem oder mehreren der Ansprüche 1 bis 10, dadurch gekennzeichnet, daß die Verweilzeit der Reaktionsmischung im Reaktionsrohr größer als 10 s, vorzugsweise größer als 20 s, ist.

12. Verfahren nach einem oder mehreren der Ansprüche 1 bis 11, dadurch gekennzeichnet, daß die Scheibenzerstäubertrocknung bei einer Umdrehungszahl der Zerstäuberscheibe von 15000 bis 25000 UmP, vorzugsweise 17000 bis 20000 UmP, durchgeführt wird.

13. Vorrichtung zur Herstellung von Natriumaluminat unter Mitverwendung eines Zerstäubertrockners, durch den Natriumaluminat zerstäubt und getrocknet wird, vorzugsweise zur Durchführung des Verfahrens nach einem oder mehreren der Ansprüche 1 bis 12, dadurch gekennzeichnet, daß sie aus einem beheizbaren, mit Rührer sowie Zuleitungen für die Reaktionsteilnehmer versehenen Vormischbehälter, mindestens einem mit dem Vormischbehälter mittelbar oder unmittelbar verbundenen, vorzugsweise wendelförmig und als Doppelmantelrohr ausgebildeten Reaktionsrohr und mindestens einem Zerstäubungstrockner, der unmittelbar oder über eine Rohrleitung mit dem Reaktionsrohrende verbunden ist, und einem nachgeschalteten Wirbelschichttrockner oder Fließbetttrockner besteht.

14. Vorrichtung nach Anspruch 13, dadurch gekennzeichnet, daß der Mischbehälter als Druckbehälter ausgebildet und mit Zuleitungen für die Inertgaszufuhr versehen und mit dem Reaktionsrohranfang unmittelbar verbunden ist.

15. Vorrichtung nach Anspruch 13, dadurch gekennzeichnet, daß im Reaktionsrohr, vorzugsweise zwischen dem Boden des Mischbehälters und dem Reaktionsrohranfang eine Druckpumpe angeordnet ist.

16. Vorrichtung nach einem oder mehreren der Ansprüche 13 bis 15, dadurch gekennzeichnet, daß eine Kühlvorrichtung vor der Zerstäubertrocknungsvorrichtung oder an dessen Reaktionsrohrende angeordnet ist.

17. Vorrichtung nach einem oder mehreren der Ansprüche 13 bis 16, dadurch gekennzeichnet, daß die im Zerstäubungstrockner verwendete Zerstäuberscheibe einen im Winkel von 35 bis 80° (bezogen auf die zur Rotationsachse im Winkel von 90° angeordnete Rotationsebene) angeordneten Rand und/oder eine wulst- oder ringähnliche Randprofilierung aufweist und die Austrittsöffnungen oder Zerstäuberöffnungen der Zerstäuberscheibe an der gewölbten oder profilierten Innenfläche im Rand oder Innenfläche der wulst- und/oder ringförmigen Randprofilierung angeordnet sind.

18. Vorrichtung nach einem oder mehreren der Ansprüche 13 bis 17, dadurch gekennzeichnet, daß zwischen dem Reaktionsrohranfang und dem Mischgefäßboden oder Mischgefäßauslaß oder der Druckpumpe ein Rohrleitungsanschluß zur Einleitung von Inertgas und/oder Luft angeordnet ist.

## Claims

1. A method for the production of sodium aluminate of the general formula NaAlO₂, NaAlO₂ x 1.5 H₂O and/or NaAlO₂ x X H₂O by reacting hydrous aluminium oxide and/or aluminium hydroxide with an excess of sodium hydroxide and while maintaining a weight ratio of Al : Na of
1 : 1.03 to 1 : 1.50, preferably
1 : 1.05 to 1 : 1.30,
using an aqueous sodium hydroxide solution having an NaOH content of
25 to 55% by weight, preferably
35 to 51% by weight,
in which after the reaction dehydration of the mixture takes place by spray drying with the co-use of heated gases or vapours as heat carriers, characterised in that a suspension of hydrous aluminium oxide and/or aluminium hydroxide in an excess of sodium hydroxide is produced in a mixing vessel, preferably in a heatable premixing vessel, with stirring at temperatures of 20 to 120°C, preferably 30 to 80°C, this suspension in order to react the reactants is then passed under pressure through at least one heated reaction tube which is connected indirectly or directly to the mixing vessel, preferably heatable premixing vessel and the resulting sodium aluminate solution is subjected to spray drying, with the gas exit temperature or steam exit temperature of the gas used in the spray drying operation being set to a temperature of 130 to 190°C, preferably 40 to 170°C.

2. A method according to Claim 1, characterised in that the reaction tube is set to a temperature of 100 to 160°C, preferably 115 to 140°C, and the sodium aluminate solution is cooled before the spray drying operation to a temperature below the boiling temperature thereof, preferably is cooled to 2 to 15°C below the boiling temperature.

3. A method according to Claims 1 and 2, characterised in that a pressure of 1.5 to 10 bar, preferably 2 to 5 bar, is maintained in the reaction tube.

4. A method according to one or more of Claims 1 to 3, characterised in that the pressure in the reaction tube is set by an inert gas overpressure or air overpressure in the closed mixing vessel, preferably nitrogen gas overpressure and/or by a pressure increase, preferably by means of at least one pressure pump located between the mixing vessel and reaction tube.

5. A method according to one or more of Claims 1 to 4, characterised in that the throughput rate of the reaction mixture and/or of the resulting sodium aluminate solution through the reaction tube is more than 0.01 kg/min, preferably more than 0.5 kg/min.

6. A method according to one or more of Claims 1 to 5, characterised in that the spray drying, preferably disc spray drying, operation is combined with a subsequent drying operation, preferably fluidised bed drying operation, or the fluidised bed drying operation succeeds the spray drying operation, preferably disc spray drying, with the fluidised bed drying operation being performed at a temperature (as a function of the desired degree of drying) of above 170°C, preferably above 190°C.

7. A method according to one or more of Claims 1 to 6, characterised in that the reaction and/or the spray drying is carried out without the co-use of additives and/or stabilising agents.

8. A method according to one or more of Claims 1 to 7, characterised in that the resulting sodium aluminate solution is atomised at an angle of less than 65° (relative to the axis of rotation and measured from the axis of rotation) by means of the spray disc used in the disc spray drying operation, and is swirled and dried with the co-use of a hot air stream which is guided in annular or helical fashion about the spray disc to the vessel bottom.

9. A method according to one or more of Claims 1 to 8, characterised in that by maintaining an elevated blowing-in rate of the hot air or of the hot inert gas, due to the edge-shaped, bead-shaped or ring-shaped profiling of the spray disc, due to the increase in distance of the side wall from the spray disc and due to the increase in distance of the spray disc from the vessel base, less than 30% by weight, preferably less than 20% by weight, of the sodium aluminate emerging from the spray disc (calculated as solids) hits the side wall of the vessel or drying vessel.

10. A method according to one or more of Claims 1 to 9, characterised in that due to the spray disc used in the disc spray drying operation the sodium aluminate solution is flung away at an angle of 25 to 140°, preferably 35 to 80° (relative to the plane of rotation located at an angle of 90° to the axis of rotation), with a spray disc being used which has bead-like or ring-like edge profiling and has outlet openings or atomising openings on a curved or profiled inner surface in the edge or in the inner surface of the bead-shaped or ring-shaped edge profiling, that by the co-use of a dry gas stream or hot air stream the flung and sprayed sodium aluminate solutions are deflected or largely deflected from the side walls of the drying vessel and are simultaneously swirled, the distance of the side wall of the drying vessel from the spray disc being greater than half the radius of the spray disc, preferably greater than the radius of the spray disc.

11. A method according to one or more of Claims 1 to 10, characterised in that the dwell time of the reaction mixture in the reaction tube is greater than 10 seconds, preferably greater than 20 seconds.

12. A method according to one or more of Claims 1 to 11, characterised in that the disc spray drying operation is performed at a speed of rotation of the spray disc of 15,000 to 25,000 rpm, preferably 17,000 to 20,000 rpm.

13. An apparatus for producing sodium aluminate with the co-use of a spray dryer by means of which sodium aluminate is atomised and dried, preferably for performing the method according to one or more of Claims 1 to 12, characterised in that it consists of a heatable premixing vessel provided with stirrers and feed lines for the reactants, at least one reaction tube which is connected indirectly or directly to the premixing vessel, and which is preferably helical and constructed as a double-casing tube, and at least one spray dryer which is connected directly or by means of a pipe to the end of the reaction tube, and a subsequent moving bed dryer or fluidised bed dryer.

14. An apparatus according to Claim 13, characterized in that the mixing vessel is designed as a pressure vessel and is provided with feed lines for supplying the inert gas and is connected directly to the start of the reaction tube.

15. An apparatus according to Claim 13, characterized in that a pressure pump is located in the reaction tube, preferably between the base of the mixing vessel and the start of the reaction tube.

16. An apparatus according to one or more of Claims 13 to 15, characterised in that a cooling device is located before the spray drying device or at the end of the reaction tube thereof.

17. An apparatus according to one or more of Claims 13 to 16, characterized in that the spray disc used in the spray dryer has an edge and/or bead-like or ring-like edge profiling at an angle of 35 to 80° (relative to the plane of rotation located at an angle of 90° to the axis of rotation) and the exit openings or atomising openings of the spray disc are located on the curved or profiled inner surface in the edge or inner surface of the bead-shaped and/or ring-shaped edge profiling.

18. An apparatus according to one or more of Claims 13 to 17, characterised in that a pipe connection for introducing inert gas and/or air is located between the start of the reaction tube and the mixing vessel base or mixing vessel outlet or the pressure pump.

## Revendications

1. Procédé de fabrication d'aluminate de sodium de formule générale NaAlO₂, NaAlO₂ x 1,5 H₂O et/ou NaAlO₂ x X H₂O par réaction d'alumine hydratée et/ou d'hydroxyde d'aluminium avec un excès d'hydroxyde de sodium et maintien d'un rapport pondéral Al:Na de
1:1,03 à 1:1,50, de préférence de
1:1,05 à 1:1,30
par emploi d'une solution aqueuse d'hydroxyde de sodium avec une teneur en NaOH de
23 à 55% en poids, de préférence de
35 à 51% en poids,
une déshydratation du mélange par séchage par atomisation avec emploi simultané de gaz ou de vapeurs chauffés comme caloporteur ayant lieu après la réaction, caractérisé en ce que, dans une cuve de mélange, de préférence dans une cuve de prémélange chauffante, on prépare sous agitation une suspension d'alumine hydratée et/ou d'hydroxyde d'aluminium dans un excès d'hydroxyde de sodium à des températures de 20 à 120°C, de préférence de 30 à 80°C, que l'on fait ensuite passer cette suspension sous pression, en vue de la réaction des partenaires réactionnels, à travers au moins un réacteur tubulaire chauffé, relié directement ou indirectement à la cuve de mélange, de préférence à la cuve de prémélange chauffante et soumet la solution d'aluminate de sodium obtenue à un séchage par atomisation, moyennant quoi la température de sortie du gaz ou de la vapeur du gaz employé lors du séchage par atomisation est ajustée à une température de 130 à 190°C, de préférence de 40 à 170°C.

2. Procédé selon la revendication 1, caractérisé en ce que le réacteur tubulaire est réglé à une température de 100 à 160°C, de préférence de 115 à 140°C et que la solution d'aluminate de sodium est refroidie, avant le séchage par atomisation, à une température inférieure à sa température d'ébullition, de préférence de 2 à 15°C au-dessous de la température d'ébullition.

3. Procédé selon les revendications 1 et 2, caractérisé en ce que, dans le réacteur tubulaire, on maintient une pression de 1,5 à 10 bars, de préférence de 2 à 5 bars.

4. Procédé selon une ou plusieurs des revendications 1 à 3, caractérisé en ce que la pression dans le réacteur tubulaire est ajustée par une surpression de gaz inerte ou par une surpression d'air dans la cuve de mélange close, de préférence par une surpression d'azote gazeux et/ou par une élévation de la pression, de préférence à l'aide d'au moins une pompe de compression disposée entre la cuve de mélange et le réacteur tubulaire.

5. Procédé selon une ou plusieurs des revendications 1 à 4, caractérisé en ce que le débit du mélange réactionnel et/ou de la solution d'aluminate de sodium formée à travers le réacteur tubulaire s'élève à plus de 0,01 kg/ min., de préférence à plus de 0,5 kg/min.

6. Procédé selon une ou plusieurs des revendications 1 à 5, caractérisé en ce que le séchage par atomisation, de préférence le séchage par atomisation à disque est combiné avec un postséchage, de préférence un séchage en lit mobile ou que le séchage en lit mobile est intercalé à la suite du séchage par atomisation, de préférence du séchage par atomisation à disque, le séchage en lit mobile ayant lieu à une température (dépendant du degré de séchage souhaité) supérieure à 170°C, de préférence supérieure à 190°C.

7. Procédé selon une ou plusieurs des revendications 1 à 6, caractérisé en ce que la réaction et/ou le séchage par atomisation s'effectue sans emploi simultané d'adjuvants et/ou de stabilisants.

8. Procédé selon une ou plusieurs des revendications 1 à 7, caractérisé en ce que la solution d'aluminate de sodium formée est pulvérisée au moyen du disque de l'atomiseur utilisé lors du séchage par atomisation à disque suivant un angle inférieur à 65° (par rapport à l'axe de rotation et mesuré à partir de l'axe de rotation), est fluidisée et séchée avec emploi simultané d'un courant d'air chaud dirigé, en un mouvement circulaire ou hélicoïdal autour du disque de l'atomiseur, vers le bas du récipient.

9. Procédé selon une ou plusieurs des revendications 1 à 8, caractérisé en ce que, du fait du maintien d'une vitesse d'injection accrue de l'air chaud ou du gaz inerte chaud, du profilage de bord,torique ou annulaire du disque de l'atomiseur, de l'augmentation de l'intervalle entre la paroi latérale et le disque d'atomisation et de l'augmentation de l'intervalle entre le disque d'atomisation et le fond du récipient, moins de 30% en poids, de préférence moins de 20% en poids de l'aluminate de sodium sortant du disque de l'atomiseur (calculés en matière solide) atteignent la paroi latérale du récipient ou récipient de séchage.

10. Procédé selon une ou plusieurs des revendications 1 à 9, caractérisé en ce que la solution d'aluminate de sodium est projetée par le disque d'atomisation employé au cours du séchage par atomisation à disque selon un angle de 25 à 140°, de préférence de 35 à 80° (ramenés au plan de rotation disposé à 90° par rapport à l'axe de rotation), auquel cas il est fait appel à un disque d'atomisation présentant un profilage de bord torique ou annulaire et possédant des orifices de sortie ou des orifices de l'atomiseur sur la surface interne bombée ou profilée au bord ou dans la surface interne du profilage de bord torique ou annulaire, que les solutions d'aluminate de sodium projetées et pulvérisées sont déviées ou déviées dans une large mesure à partir de la paroi latérale du récipient de séchage par emploi simultané d'un courant de gaz sec ou d'un courant d'air chaud et sont en même temps animées d'un mouvement tourbillonnaire, moyennant quoi l'intervalle entre la paroi latérale du récipient de séchage et le disque d'atomisation est supérieur au demi-rayon du disque de l'atomiseur, de préférence supérieur au rayon du disque de l'atomiseur.

11. Procédé selon une ou plusieurs des revendications 1 à 10, caractérisé en ce que le temps de séjour du mélange réactionnel dans le réacteur tubulaire est supérieur à 10 s, de préférence supérieur à 20 s.

12. Procédé selon une ou plusieurs des revendications 1 à 11, caractérisé en ce que le séchage par atomisation à disque s'effectue à une vitesse de rotation du disque de l'atomiseur de 15000 à 25000 t/min., de préférence de 17000 à 20000 t/min.

13. Dispositif pour la fabrication d'aluminate de sodium avec emploi simultané d'un séchoir à atomiseur par lequel l'aluminate de sodium est pulvérisé et séché, de préférence par conduite du procédé selon une ou plusieurs des revendications 1 à 12, caractérisé en ce qu'il est constitué par une cuve de prémélange pouvant être chauffée équipée d'un agitateur ainsi que de conduites d'alimentation pour les partenaires réactionnels, par au moins un réacteur tubulaire, de préférence en forme de serpentin et agencé en tube à double enveloppe, relié directement ou indirectement à la cuve de prémélange par au moins un séchoir par atomisation qui est relié à l'extrémité du réacteur tubulaire directement ou par l'intermédiaire d'une conduite et par un séchoir à lit fluidisé ou séchoir à lit mobile intercalé à la suite.

14. Dispositif selon la revendication 13, caractérisé en ce que la cuve de mélange est conçue sous forme de récipient sous pression, est munie de conduites pour l'alimentation en gaz inerte et est directement reliée à l'entrée du réacteur tubulaire.

15. Dispositif selon la revendication 13, caractérisé en ce qu'une pompe de compression est montée dans le réacteur tubulaire, de préférence entre le fond de la cuve de mélange et l'entrée du réacteur tubulaire.

16. Dispositif selon une ou plusieurs des revendications 13 à 15, caractérisé en ce qu'un système de refroidissement est placé avant le dispositif de séchage par atomisation ou à l'extrémité du réacteur tubulaire du dispositif.

17. Dispositif selon une ou plusieurs des revendications 13 à 16, caractérisé en ce que le disque de l'atomiseur utilisé dans le séchoir par atomisation comporte un bord disposé selon un angle de 35 à 80° (ramenés au plan de rotation disposé selon un angle de 90° par rapport à l'axe de rotation) et/ou un profilage de bord torique ou annulaire et que les orifices de sortie ou les orifices de l'atomiseur du disque de l'atomiseur sont placés sur la surface interne bombée ou profilée dans le bord ou la surface interne du profilage de bord torique et/ou annulaire.

18. Dispositif selon une ou plusieurs des revendications 13 à 17, caractérisé en ce qu'une conduite de connexion pour l'introduction de gaz inerte et/ou d'air est placée entre l'entrée du réacteur tubulaire et le fond de la cuve de mélange, la sortie de la cuve de mélange ou la pompe de compression.
